# FASCICULE DE BREVET EUROPEEN

(11) **EP 0 381 544 B1**
(45) Date de publication et mention de la délivrance du brevet: **21.07.1993**
(21) Numéro de dépôt: 90400065.0
(22) Date de dépôt: 09.01.1990
(51) Int. Cl.: F16D 43/14

(54) **Embrayage centrifuge destiné à un actionneur de condamnation d'une serrure de porte**
Fliehkraftkupplung zur Betätigung der Sperrvorrichtung einer Tür
Certrifugal clutch for actuating the lock of a door

(30) Priorité: 24.01.1989 FR 8900820
(43) Date de publication de la demande: 08.08.1990
(73) Titulaire: ROCKWELL AUTOMOTIVE BODY SYSTEMS-FRANCE EN ABREGE:ROCKWELL ABS-FRANCE, 92082 Paris La Defense 2 (FR)
(72) Inventeur: Noel, Jean-Pierre, F-88100 St Die (FR)
(74) Mandataire: Martin, Jean-Paul

(56) Documents cités:
- CH-A- 388 042
- FR-A- 1 395 529
- FR-A- 1 396 044
- FR-A- 2 594 507
- FR-A- 2 624 575
- US-A- 3 810 533

## Description

La présente invention a pour objet un embrayage centrifuge pour actionneur de condamnation d'une serrure de porte de véhicule automobile, selon le préambule de la revendication 1.

Plus précisément, cet embrayage est du type destiné à être interposé entre un moteur électrique et un train d'engrenages d'entraînement d'une vis sur laquelle est monté un manchon de commande d'un organe de condamnation. Cet embrayage comporte au moins une masselotte disposée radialement dans un moyeu fixé à l'arbre de sortie du moteur, soumise à l'action d'un organe élastique de rappel vers une position débrayée au repos et susceptible d'être entraînée par la rotation de l'arbre dans une position embrayée où elle fait saillie du moyeu et est en prise avec des moyens de transmission du couple de l'arbre au train d'engrenages.

Le brevet français FR-A-2 594 507 du 20 février 1986 au nom de la Demanderesse décrit un embrayage centrifuge de ce type. Dans ce document, les moyens de transmission du couple entre la ou les masselottes centrifuges et le train d'engrenages comprennent des taquets sur la paroi intérieure d'une cloche contenant les masselottes et munie d'un pignon d'entraînement du train d'engrenages. Les taquets d'embrayage susceptibles de coopérer avec les masselottes, lorsque ces dernières sont en position d'embrayage, ne permettent pas de limiter le couple et donc d'éviter des rebonds en cas d'arrêt brutal de la cloche.

L'invention a pour but de modifier la structure de cet embrayage afin de rémédier à ces inconvénients, tout en en conservant les avantages.

Suivant l'invention, ce but est atteint en-ce que lesdits moyens de transmission comprennent un anneau élastique monté en appui de friction sur la paroi extérieure d'un support coaxial à une extrémité de l'arbre de sortie au-delà du moyeu et pourvu d'un pignon d'entraînement, et l'anneau présente deux parties terminales placées en regard l'une de l'autre et radialement en vis-à-vis de la masselotte, de manière que cette dernière puisse venir en appui sur ces parties terminales lorsqu'elle y est poussée par une force centrifuge suffisante, la forme de ces parties terminales étant telle que la masselotte y prenant appui peut entraîner l'anneau en rotation qui, à son tour, peut entraîner alors le support et son pignon en rotation dans l'un ou l'autre des deux sens de rotation du moteur.

Suivant un mode de réalisation de l'invention, le support de l'anneau comporte un couvercle transversal muni de moyens de solidarisation avec le pignon, et une gorge de réception de l'anneau est délimitée entre le pignon et le couvercle, cette gorge étant coaxiale à l'arbre et les deux parties terminales de l'anneau s'étendant axialement au-delà de la gorge en regard de la masselotte.

D'autres particularités et avantages de l'invention apparaîtront au cours de la description qui va suivre, faite en référence aux dessin annexé qui en illustre une forme de réalisation à titre d'exemple non limitatif.
La figure 1 est une vue en perspective d'un actionneur de condamnation d'une serrure de porte de véhicule automobile muni d'un embrayage pouvant être du type visé par l'invention.
La figure 2 est une vue en coupe axiale d'un mode de réalisation d'un embrayage centrifuge conforme à l'invention pouvant équiper l'actionneur de la Fig.1.
La figure 3 est une vue en coupe transversale suivant 3-3 de la Fig.2.
La figure 4 est une vue en coupe transversale suivant 4-4 de la Fig.2.
La figure 5 est une vue partiellement en plan et partiellement en coupe axiale dans un plan perpendiculaire à celui de la Fig.2 de l'actionneur des Fig.2 à 4.

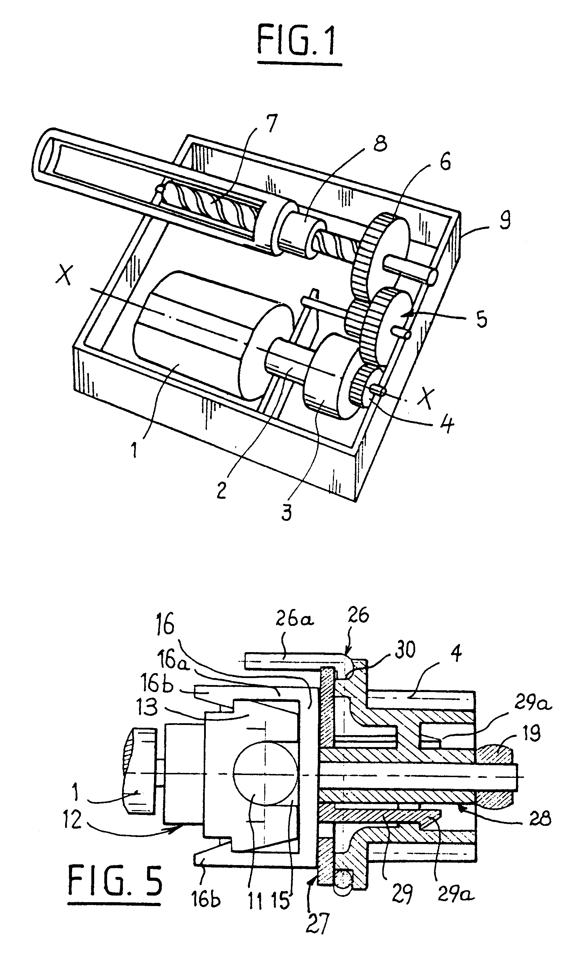

L'actionneur représenté à la Fig.1 est destiné à permettre la condamnation électrique d'une serrure non représentée d'une porte de véhicule automobile.

Il comporte un moteur électrique 1 équipé d'un arbre moteur de sortie 2 d'axe XX traversant axialement de part en part un embrayage centrifuge 3 muni d'un pignon terminal 4 constituant le premier élément d'un train d'engrenages 5.

Le dernier pignon 6 du train 5 est fixé à une vis 7 sur laquelle est monté un manchon 8 qui peut être entraîné en translation par la rotation de la vis 7, pour actionner l'organe de condamnation (non représenté) de la serrure, l'ensemble de ces pièces étant logé dans un boîtier 9.

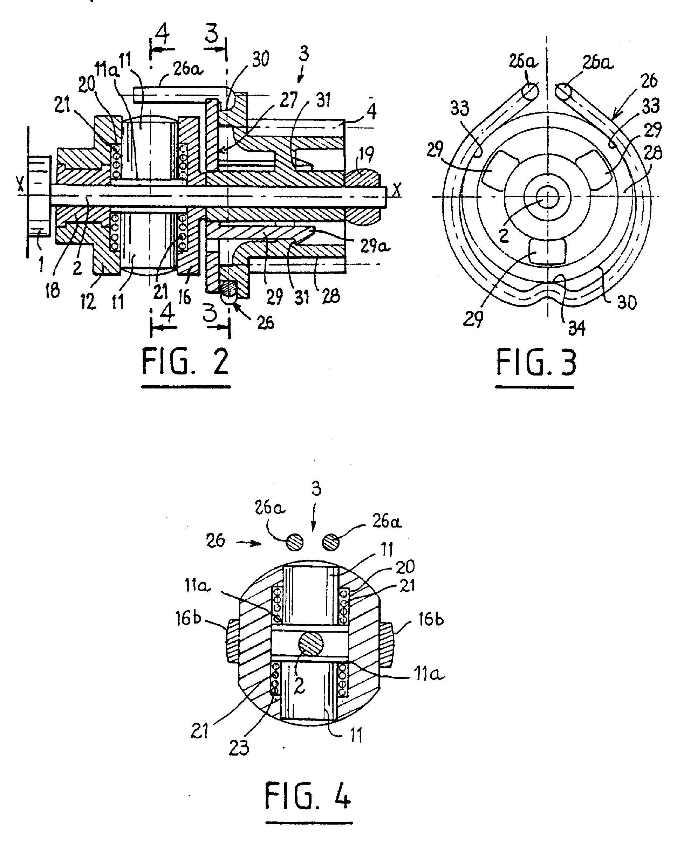

L'embrayage centrifuge 3 représenté aux Fig.2 à 5 comprend deux masselottes 11, formées de préférence par des pièces cylindriques et disposées radialement de manière diamétralement opposée dans un moyeu 12 fixé à l'arbre de sortie 2 qui le traverse. Un insert 18 intérieur au moyeu 12 est interposé entre les masselottes 11 et le moteur 1. Chaque masselotte 11 est soumise à l'action d'un ressort hélicoïdal 21 de rappel entourant la masselotte 11 correspondante. Chaque ressort 11 est comprimé entre, d'une part la périphérie d'une rondelle 11a fixée à la masselotte 11 et en appui sur l'arbre 2 lorsque la masselotte 11 est au repos, et d'autre part un épaulement 20 annulaire intérieur au moyen 12.

Les ressorts 21 sollicitent élastiquement les masselottes 11 vers leur position de repos en appui sur l'arbre 2 par les rondelles 11a (Fig.2). A partir de cette position débrayée les masselottes 11 peuvent s'écarter radialement lorsque la force centrifuge est suffisante.

Le moyeu 12 comprend deux branches sensiblement axiales 13 et 14 à peu près parallèles à l'arbre 2 et qui entourent les masselottes 11 en délimitant pour celles-ci un logement 15 fermé par un couvercle 16 muni de pattes axiales 16a, dont les extrémités 16b peuvent venir s'encliqueter élastiquement sur des crans de la surface du moyeu 12 (Fig.5).

L'embrayage 3 comprend des moyens de transmission du couple de l'arbre 2 au pignon 4, qui comportent un anneau élastique 26 monté en appui de friction sur la surface extérieure d'un support 27,28 coaxial à l'extrémité de l'arbre de sortie 2 au-delà du moyeu 12. L'anneau 26 présente deux parties terminales axiales 26a, placées en regard l'une de l'autre et radialement en vis-à-vis des masselottes 11.

Le support de l'anneau 26 comporte un couvercle transversal 27 muni de moyens de solidarisation avec le pignon 4, et plus précisément avec une structure 28 intérieure à ce dernier, coaxiale à l'arbre 2 et sur le pourtour de laquelle est formée la denture du pignon 4. Une gorge 30 de réception de l'anneau 26 est délimitée entre le couvercle 27 et la structure 28, cette gorge étant coaxiale à l'arbre 2 et les parties terminales 26a de l'anneau 26 en faisant saillie axialement.

Le couvercle 27 comporte des moyens de solidarisation avec la structure 28 et le pignon 4. Dans l'exemple représenté, ces moyens sont constitués par des bras axiaux 29 dont les extrémités 29a peuvent s'encliqueter élastiquement et de manière amovible sur des épaulements radiaux 31 de la structure 28 traversée par l'arbre 2.

L'anneau 26 peut être en appui sur le fond de la gorge 30 par trois points 32, 33, 34 comme représenté, ou davantage, ou bien sur toute la surface de cette gorge, en fonction de sa conformation.

Un palier 19 de support de l'arbre 2 est fixé à ce dernier au-delà du pignon 4.

Le fonctionnement de cet embrayage est le suivant.

Lorsque l'arbre 2 tourne à une vitesse suffisante, les masselottes 11 s'écartent radialement contre la force de rappel de leurs ressorts 21. L'une d'elles vient donc en appui sur les parties terminales 26a de l'anneau 26, tandis que l'autre est retenue à une certaine distance de l'arbre 2 par la compression du ressort 21 entre la rondelle 11a et l'épaulement 20. L'anneau 26 entraîne alors, par friction, le couvercle 27 et le pignon 4.

L'anneau 26 peut avoir une section circulaire ou carrée par exemple. Le couvercle 27 facilite le montage du ressort 26, en permettant de ne pas dépasser la limite élastique de celui-ci lors de son montage. Le clipsage des bras axiaux 29 sur la structure intérieure 28 du pignon 4 permet de fermer la gorge 30 par le couvercle 27, et donc d'y maintenir en place l'anneau élastique 26.

La conformation de l'anneau 26 avec trois points d'appui 33, 34 présente deux avantages : plus grande facilité de montage de l'anneau 26 sur son support 28 et absence de contacts hyperstatiques de l'anneau sur sa gorge 30.

Lorsque l'actionneur a terminé sa course au moment de l'arrivée en butée de la pièce entraînée, par exemple une vitre de porte du véhicule, apparaissent des couples importants dûs à l'inertie des pièces en mouvement, et il se produit un glissement de l'anneau élastique 26 par rapport à la structure 28 et au couvercle 27. Ce glissement présente l'avantage de diminuer le rebond dû à l'amortissement des pièces qui arrivent en butée, et supprime les débrayages intempestifs qui sont source de bruit.

Un autre avantage du ressort limiteur de couple constitué par l'anneau élastique 26 est qu'il permet de réduire les contraintes dans le mécanisme de l'actionneur et dans l'embrayage lui-même, ce qui peut conduire à ne mettre en oeuvre qu'une seule masselotte 11.

Toutefois la présence de deux masselottes 11 symétriques équilibre dynamiquement le porte-masselotte.

La structure de l'embrayage selon l'invention est notablement simplifiée par rapport à celle des embrayages connus, décrits dans le brevet et l'addition mentionnés ci-dessus.

Il convient de noter que la forme de l'anneau 26 et de ses parties terminales 26a permet à ces dernières de coopérer de manière identique avec une masselotte, en entraînant le support (27, 28) et le pignon dans l'un ou l'autre des deux sens de rotation du moteur. L'embrayage peut ainsi fonctionner dans les deux sens de rotation du moteur.

## Revendications

1. Embrayage centrifuge (3) pour actionneur de condamnation d'une serrure de porte de véhicule automobile, destiné à être interposé entre un moteur électrique (1) et un train d'engrenages (5) d'entraînement d'un organe de condamnation, cet embrayage comportant au moins une masselotte (11) disposée radialement dans un moyeu (12) fixé à l'arbre (2) de sortie du moteur (1), soumise à l'action d'un organe élastique (21) de rappel vers une position débrayée au repos et susceptible d'être entraînée par la rotation de l'arbre (2) dans une position embrayée où elle fait saillie du moyeu (12) et est en prise avec des moyens de transmission du couple de l'arbre (2) au train d'engrenages, caractérisé en ce que lesdits moyens de transmission comprennent un anneau élastique (26) monté en appui de friction sur la paroi extérieure d'un support (27,28) coaxial à une extrémité de l'arbre de sortie (2) au-delà du moyeu (12) et pourvu d'un pignon (4) d'entraînement, et l'anneau (26) présente deux parties terminales (26a) placées en regard l'une de l'autre et radialement en vis-à-vis de la masselotte (11) de manière que cette dernière puisse venir en appui sur ces parties terminales (26a) lorsqu'elle y est poussée par une force centrifuge suffisante, la forme de ces parties terminales (26a) étant telle que la masselotte (11) y prenant appui peut entraîner l'anneau (26) en rotation qui, à son tour, peut entraîner alors le support (27,28) et son pignon (4,28) en rotation dans l'un ou l'autre des deux sens de rotation du moteur (1).

2. Embrayage selon la revendication 1, caractérisé en ce que le support de l'anneau comporte un couvercle transversal (27) muni de moyens de solidarisation avec le pignon (4,28), et une gorge (30) de réception de l'anneau (26) est délimitée entre le pignon (4,28) et le couvercle (27), cette gorge étant coaxiale à l'arbre (2) et les deux parties terminales (26a) de l'anneau (26) s'étendant axialement au-delà de la gorge (30) en regard de la masselotte (11).

3. Embrayage selon la revendication 2, caractérisé en ce que les moyens de solidarisation comprennent des bras axiaux (29) dont les extrémités (29a) peuvent s'encliqueter élastiquement et de manière amovible sur une structure intérieure (28) du pignon (4,28).

4. Embrayage selon l'une des revendications 2 et 3, caractérisé en ce que l'anneau (26) est conformé de manière à être en appui de friction, soit sur toute la surface de la gorge (30) soit sur trois points (33,34) de celle-ci.

## Claims

1. Centrifugal clutch (3) for an actuator for preventing the use of a motor vehicle door lock, intended to be interposed between an electric motor (1) and a gear train (5) for driving a prevention member, this clutch comprising at least one weight (11) disposed radially in a hub (12) fixed to the output shaft (2) of the motor (1), subjected to the action of an elastic member (21) providing return towards a disengaged position at rest and capable of being driven by the rotation of the shaft (2) into an engaged position in which it projects from the hub (12) and is in engagement with means for transmitting the torque from the shaft (2) to the gear train, characterised in that the said transmission means comprise an elastic ring (26) mounted so as to bear frictionally on the external wall of a support (27, 28) coaxial with one end of the output shaft (2) beyond the hub (12) and equipped with a driving pinion (4), and the ring (26) has two end parts (26a) facing one another and radially opposite the weight (11), in such a way that the latter can come be bear on these end parts (26a) when it is pushed there by a sufficiently great centrifugal force, the shape of these end parts being such that the weight (11) bearing on them is able to drive the ring (26) in rotation, which can then drive the support (27, 28) and its pinion (4, 28) in rotation in either of the two directions of rotation of the motor (1).

2. Clutch according to Claim 1, characterised in that the support for the ring has a transverse cover (27) equipped with means for fixing it to the pinion (4, 28), and a groove (30) for receiving the ring (26) is defined between the pinion (4, 28) and the cover (27), this groove being coaxial with the shaft (2) and the two end parts (26a) of the ring (26) extending axially beyond the groove (30) and opposite the weight (11).

3. Clutch according to Claim 2, characterised in that the fixing means comprise axial arms (29), the ends (29a) of which can snap elastically and removably onto an internal structure (28) of the pinion (4, 28).

4. Clutch according to one of Claims 2 and 3, characterised in that the ring (26) is shaped so as to bear frictionally either over the entire surface of the groove (30) or on three points (33, 34) on the latter.

## Patentansprüche

1. Fliehkraftkupplung (3) für ein Betätigungsorgan einer Sperrvorrichtung einer Kraftfahrzeugtür, zur Einfügung zwischen einem Elektromotor (1) und einem Getriebezug (5) für den Antrieb eines Sperrorgangs, wobei diese Kupplung wenigstens ein Fliehgewicht (11) aufweist, das radial in einer an der Ausgangswelle (2) des Motors (1) befestigten Nabe (12) angeordnet ist, unter der Wirkung eines elastischen Rückstellorgans (21) in Richtung auf eine ausgekuppelte Ruhestellung steht und durch die Drehung der Welle (2) in eine eingekuppelte Stellung bewegbar ist, in der es aus der Nabe (12) vorspringt und mit Mitteln zur Drehmomentübertragung von der Welle (2) auf den Antriebszug in Eingriff steht, dadurch **gekennzeichnet,** daß diese Mittel zur Drehmomentübertragung einen elastischen Ring (26) aufweisen, der reibschlüssig an einer Außenwand eines zu einem Ende der Ausgangswelle (2) jenseits der Nabe (12) koaxialen Trägers (27,28) anliegt, der mit einem Antriebsritzel (4) versehen ist, und daß der Ring (26) zwei einander gegenüberliegende Endabschnitte (26a) bildet, die dem Fliehgewicht (11) derart radial gegenüberliegen, daß letzteres an diesen Endabschnitten (26a) zur Anlage kommen kann, wenn es durch eine ausreichende Fliehkraft ausgerückt wird, wobei diese Endabschnitte (26a) so geformt sind, daß das dagegendrückende Fliehgewicht (11) den Ring (26) antreiben kann, der dann seinerseits den Träger (27,28) und sein Ritzel (4,28) zur Drehung in der einen oder anderen der beiden Drehrichtungen des Motors (1) antreibt.

2. Kupplung nach Anspruch 1, dadurch **gekennzeichnet,** daß der Träger für den Ring einen quer angeordneten Deckel (27) aufweist, der mit Mitteln zur Verbindung mit dem Ritzel (4,28) versehen ist, und daß zwischen dem Ritzel (4, 28) und dem Deckel (27) eine Aufnahmenut (30) für den Ring (26) gebildet wird, wobei diese Nut zu der Welle (2) koaxial ist und die beiden Endabschnitte (26a) des Ringes (26) sich jenseits der Nut (30) axial zu dem Fliehgewicht (11) hin erstrecken.

3. Kupplung nach Anspruch 2, dadurch **gekennzeichnet,** daß die Verbindungsmittel axiale Arme (29) aufweisen, deren Enden (29a) elastisch und lösbar an einer inneren Struktur (28) des Ritzels (4,28) einrasten können.

4. Kupplung nach Anspruch 2 oder 3, dadurch **gekennzeichnet,** daß der Ring (26) so geformt ist, daß er mit der gesamten Oberfläche der Nut (30) oder mit drei Punkten (33, 34) derselben in Reibberührung steht.
